Europäisches Patentamt

(19) European Patent Office     (11) Numéro de publication: **0 101 618**

Office européen des brevets                                  **B1**

# (12) FASCICULE DE BREVET EUROPÉEN

(45) Date de publication du fascicule du brevet:     (51) Int. Cl.⁴: **A 46 B 9/04,** A 46 B 13/02 //
21.09.88                                                        A46B7/04, A46B5/00, A46B13/08

(21) Numéro de dépôt: **83106257.3**

(22) Date de dépôt: **22.06.83**

(54) Appareil d'hygiène dentaire comprenant plusieurs brosses rotatives.

<table>
<tr><td>(30) Priorité: <b>24.08.82 FR 8214624<br>01.04.83 FR 8305421</b></td><td>(73) Titulaire: <b>Barth, Frédéric, 11, Place du Marché<br>Chevry II, F-91190 Gif- sur- Yvette (FR)</b></td></tr>
<tr><td>(43) Date de publication de la demande:<br><b>29.02.84 Bulletin 84/9</b></td><td>(72) Inventeur: <b>Barth, Frédéric, 11, Place du Marché<br>Chevry II, F-91190 Gif- sur- Yvette (FR)</b></td></tr>
<tr><td>(45) Mention de la délivrance du brevet:<br><b>21.09.88 Bulletin 88/38</b></td><td>(74) Mandataire: <b>Casalonga, Axel, BUREAU D.A.<br>CASALONGA OFFICE JOSSE & PETIT<br>Morassistrasse 8, D-8000 München 5 (DE)</b></td></tr>
<tr><td>(84) Etats contractants désignés:<br><b>AT BE CH DE FR GB IT LI LU NL SE</b></td><td></td></tr>
<tr><td>(56) Documents cité:<br><b>WO-A-82/00406<br>CH-A-472 860<br>CH-A-502 794<br>DE-C-333 302<br>FR-A-616 782<br>FR-A-1 341 314<br>FR-A-1 358 278<br>GB-A-546 136<br>GB-A-1 118 699<br>US-A-1 833 967<br>US-A-1 854 626<br>US-A-2 044 344<br>US-A-2 283 314<br>US-A-2 628 377<br>US-A-2 655 674<br>US-A-4 048 690<br>US-A-4 224 710</b></td><td>(56) Documents cité: (suite)<br><b>US-A-4 274 173<br>US-A-4 313 237</b></td></tr>
</table>

LIBER, STOCKHOLM 1988

EP 0 101 618 B1

## Description

La présente invention se rapporte à un appareil d'hygiène dentaire selon le préambule de la revendication 1, comprenant deux paires de deux brosses rotatives incurvées, flexibles ou articulées, montées sur un boîtier en forme de secteur arqué, qui présente une forme incurvée correspondant sensiblement à celle des deux arcades dentaires antagonistes et qui comprend un protège-joue extérieur et un protège-langue intérieur opposés, laissant subsister entre eux une ouverture continue inférieure et une ouverture continue supérieure opposées sur toute la longueur des brosses, les brosses étant disposées sur le boîtier et étant entraînées en rotation à l'une de leurs extrémités de manière à nettoyer simultanément les faces intérieures et les faces extérieures des dents des deux maxilaires antagonistes par brossage dans le sens gencive-dents.

Certains appareils connus du type à plusieurs brosses rotatives (voir par exemple GB-A-1 118 699) comprennent deux brosses tournant en sens contraire et destinées à brosser simultanément les mêmes faces (face intérieur ou face extérieure) d'une ou de plusieurs dents antagonistes (c'est-à-dire du maxillaire supérieur et du maxillaire inférieur). Les inconvénients des appareils de ce type sont multiples. En particulier, lors du passage du brossage des faces externes des dents au brossage des faces internes, et inversement, il est nécessaire d'inverser le sens de rotation des brosses, afin que les dents soient toujours brossées dans le sens gencive-dents. De plus, si le brossage simultané des faces externes des dents antagonistes est possible à l'aide de ces appareils, le brossage simultané des faces internes des dents antagonistes est pratiquement impossible du fait que l'utilisateur doit desserrer les dents pour pouvoir accéder à la face interne des dents. Enfin, il est nécessaire de déplacer ces appareils en bouche entre les dents extrêmes des maxillaires.

D'autres appareils (voir par exemple US-A-2 628 377) comprennent deux brosses rotatives ou trois brosses rotatives pour brosser simultanément la face extérieure et la face intérieure ainsi qu'éventuellement la face occlusale d'une ou de plusieurs dents d'un maxillaire. Sur ces appareils, les brosses peuvent tourner en permanence dans le même sens. Toutefois, il est toujours nécessaire de déplacer l'appareil sur toutes les dents et le déplacement de l'appareil en bouche, sur l'une et sur l'autre arcade dentaire, présente des difficultés dans la mesure où la forme rectiligne des trois brosses de ces appareils ne correspondant pas à la forme incurvée des arcades dentaires.

Un autre appareil (CH-A-472 860 qui correspond au préambule de la revendication 1) vise à remédier à ces inconvénients par l'utilisation de brosses incurvées ayant une longueur et une forme correspondant à celles de l'ensemble des arcades dentaires, en vue du brossage simultané des faces extérieure et intérieure de toutes les dents des deux maxillaires antagonistes. Cependant, cet appareil est très encombrant de sorte que sa mise en bouche par un utilisateur particulier semble problématique, voire impossible. En effet, l'entraînement des quatre brosses est prévu à une extrémité de l'appareil, c'est-à-dire à l'arrière de deux demi-maxillaires antagonistes. Cet entraînement s'effectue par un système d'engrenages dont la présence, à cet endroit, fait que pour des raisons de morphologie l'utilisateur ne peut pas serrer les dents lorsque l'appareil est en bouche. Par ailleurs, il y a lieu de noter que les quatre brosses de cet appareil ne permettent qu'un brossage des faces intérieure et extérieure des dents et non pas des faces occlusales. Enfin, du fait que l'appareil doit épouser la forme de l'ensemble des deux arcades dentaires antagonistes, une adaptation à des arcades dentaires de tailles et de conformations différentes n'est pas possible, ce qui impliquerait la fabrication d'un nombre relativement important de modèles différents du point de vue taille et forme.

On a enfin prorosé (US-A-4 224 710) un appareil destiné à nettoyer simultanément toutes les dents d'une arcade dentaire ou des deux arcades dentaires antagonistes, non pas à l'aide de brosses rotatives, mais de groupes de trois brosses animées d'un mouvement axial de va-et-vient, une brosse étant perpendiculaire à la face occlusale et les deux autres brosses inclinées à 45° par rapport aux faces interne et externe des dents. En plus de la complexité et de la fragilité manifeste du système de brossage de cet appareil, il faut noter que le mouvenent de va-et-vient sous 45° des poils des brosses par rapport aux faces interne et externe des dents peut certes désorganiser la plaque dentaire mais ne l'évacue pas. De plus, ce mouvement sous 45° des brosses interne et externe risque de donner lieu à des irritations gengivales par traumatismes mécaniques au niveau du sillon genvivo-dentaire, ce qui peut aboutir à une récéssion gengivale.

La présente invention a pour objet un appareil d'hygiène dentaire compact de structure simple et fiable, pouvant être utilisé en toute sécurité en vue d'un nettoyage efficace, complet et rapide de toutes les faces des dents, tout en s'adaptant à des arcades dentaires de conformations et de tailles différentes.

L'appareil d'hygiène dentaire conforme à l'invention tel que défini dans la partie caractérisante de la revendication 1 comprend cinq brosses montées suivant une disposition en H, les axes de quatre brosses étant disposés aux quatre extrémités du H et l'axe de la cinquième brosse au milieu de la barre horizontale du H. Le boîtier comprend une partie porte-brosses en forme de secteur arqué présentant une longueur et une forme incurvée correspondant sensiblement à celles de deux demi-arcades dentaires antagonistes, ladite partie porte-brosses étant composée du protège-joue du protège-langue et d'au moins deux entretoises transversales servant de supports de montage pour les brosses, et une partie de morsure située dans le prolongement de l'extrémité d'entraînementdes brosses et formant deux étranglements supérieur et inférieur opposés, adaptés pour recevoir, lorsque l'appareil est en bouche entre deux demi-arcades dentaires antagonistes, les incisives supérieures et inférieures des deux autre demi-arcades dentaires antagonistes, en vue du blocage de l'appareil en bouche par morsure à l'endroit desdits étranglements.

Les cinq brosses incurvées montées en H assurent le brossage simultané des faces intérieures, des faces extérieures et des faces occlusales des dents opposées des deux arcades dentaires. Les brosses s'étendent sur la valeur d'une demi-arcade dentaire, de sorte que l'appareil assure le brossage simultané de toutes les dents de deux demi-arcades dentaires antagonistes. Après brossage ces dents, il suffit que l'utilisateur retourne l'appareil de 180° et l'introduise entre les dents des deux autres demi-arcades dentaires antagonistes, sans pour autant changer le sens de rotation des brosses. Le protège-joue et le protège-langue empêchent tout risque ce traumatisme par les brosses en rotation. Du fait de l'entraînement des brosses depuis l'extrémité du boîtier située à l'avant de la bouche, au niveau des incisives, lorsque l'appareil est en bouche, l'utilisateur peur mordre sans problème l'appareil par ses incisives. Les deux étranglements prévus dans le boîtier pour recevoir les incisives assurent automatiquement le positionnement correct de l'appareil en bouche.

Les cinq brosses de l'appareil peuvent être entraînées par exemple à partir d'un moteur électrique par l'intermédiaire d'un jeu de sept ou de préférence neuf pignons dont le pignon central est directement entraîné par l'arbre du moteur. Ces pignons peuvent se trouver dans le boîtier de l'appareil, à l'endroit des étranglements permettant la morsure par les incisives. La partie porte-brosses en forme de segment arqué et la partie de morsure peuvent être réalisées d'une seule pièce ou sous forme de deux pièces séparées susceptible d'être accouplées et désaccouplées.

Il est cependant possible également de prévoir le train de pignons, non pas dans le boîtier, mais par exemple dans un manche renfermant le moteur électrique et susceptible d'être accouplé avec et désaccouplé d'avec le boîtier. Dans ce cas, la liaison entre le train de pignons et les cinq brosses peut être réalisée par cinq arbres flexibles, par exemple des câbles métalliques multibrins ou des joncs de matière plastique, comportant des moyens de jonction rapide.

Il est également possible d'entraîner les cinq brosses par cinq turbines alimentées en fluide à partir d'une source de fluide sous pression. De plus, il est possible d'entraîner les cinq brosses à partir d'un arbre central par l'intermédiaire de poulies et de courroies.

De préférence, les brosses comportent des poils de longueurs différentes, par exemple en alternance des poils longs et des poils courts et ou d'orientations différentes. Par ce moyen, il est possible de compenser des différences de morphologie.

L'appareil conforme à l'invention présente, vu en coupe transversale, par rapport à un axe vertical passant par l'axe de la brosse centrale une forme assymétrique en ce qui concerne les étranglements recevant les incisives supérieure et inférieure, la position des axes des autres brosses et la hauteur du protège-langue et du protège-joue. Cette assymétrie évite les interférences du boîtier avec les papilles bunoïdes de l'utilisateur et permet le brossage de toute la hauteur des incisives supérieures dont la face extérieure est plus haute que la face intérieure.

Par contre, l'appareil conforme à l'invention est parfaitement symétrique par rapport à un plan médian horizontal passant par l'axe de la brosse médiane, pour assurer le même effet de brossage dans les deux positions correspondant au brossage des demi-arcades dentaires de gauche et de droite.

En se référant au dessin annexé, on va décrire ci-après plus en détail plusieurs modes de réalisation illustratifs et non limitatifs d'un appareil d'hygiène dentaire conforme à l'invention; sur le dessin:

la fig. 1 est une vue en plan d'un mode de réalisation préféré de l'appareil conforme à l'invention;

la fig. 2 est une vue en plan schématique de l'appareil de la fig. 1, le boîtier étant séparé en deux parties;

la fig. 3 est une vue en plan simplifiée de l'appareil de la fig. 1, montrant la position de l'appareil par rapport à une arcade dentaire à brosser;

la fig. 4 est une coupe suivant A-A de la fig. 1;

la fig. 5 est une coupe suivant B-B de la fig. 1;

la fig. 6 est une vue en plan, à plus grande échelle, avec arrachement partiel, montrant les deux parties de boîtier désolidarisées;

la fig. 7 est une coupe suivant C-C de la fig. 1, l'appareil étant en bouche;

la fig. 8 est une coupe suivant D-D de la fig. 1, l'appareil étant en bouche;

la fig. 9 est une vue schématique d'un autre mode de réalisation det l'appareil suivant l'invention;

la fig. 10 est une vue en plan schématique d'un variante de l'appareil conforme à l'invention avec entraînement des brosses par des turbines;

la fig. 11 représente un mode d'entraînement des brosses par poulies et courroies.

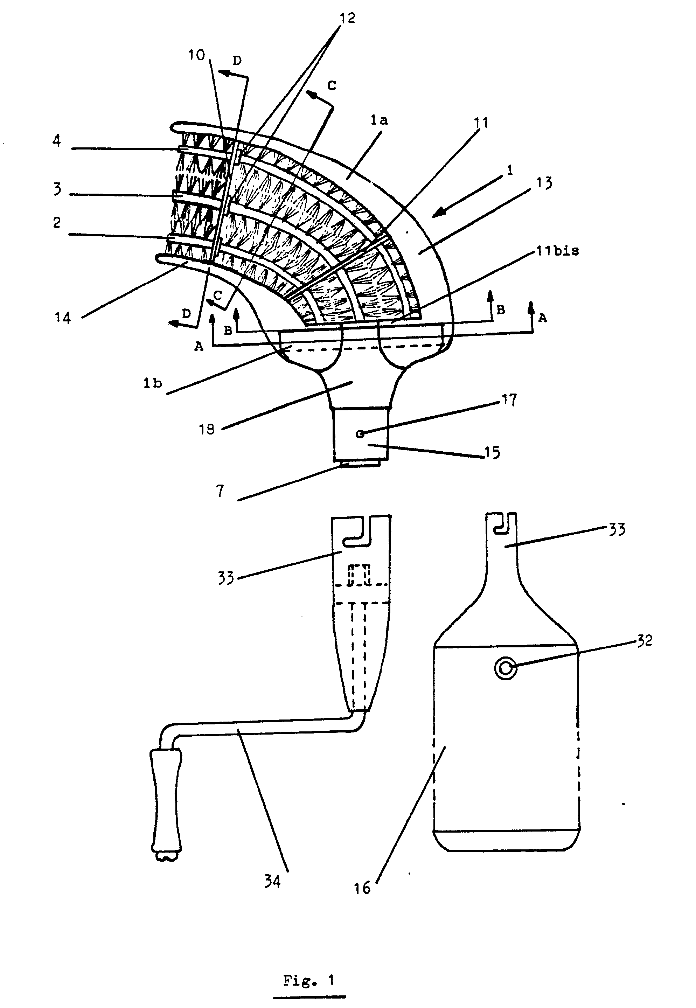

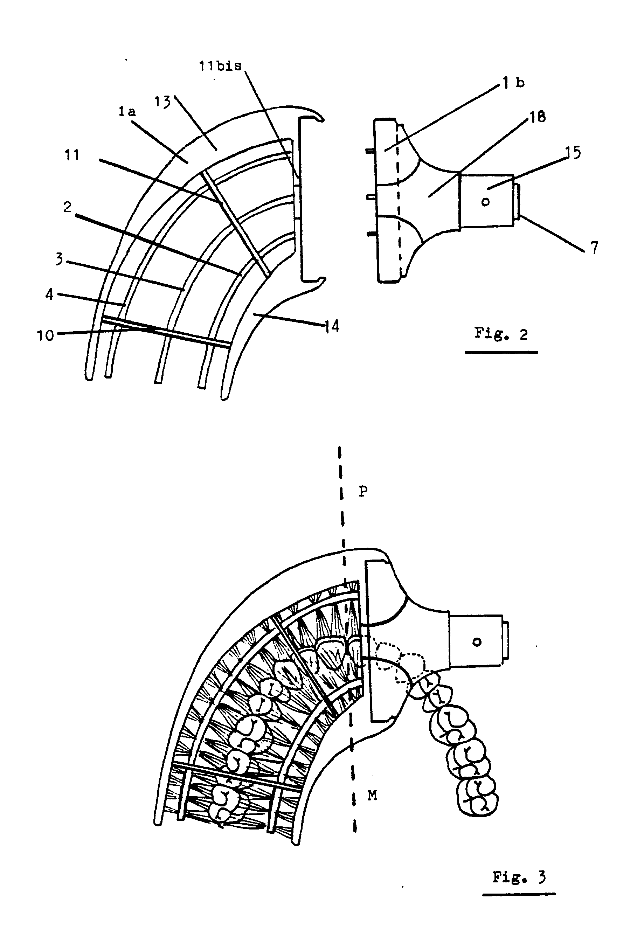

L'appareil d'hygiène dentaire tel qu'illustré par les fig. 1 à 8 comprend un boîtier 1 composé de deux parties 1a et 1b pouvant être accouplées (fig. 1) et désaccouplées (fig. 2).

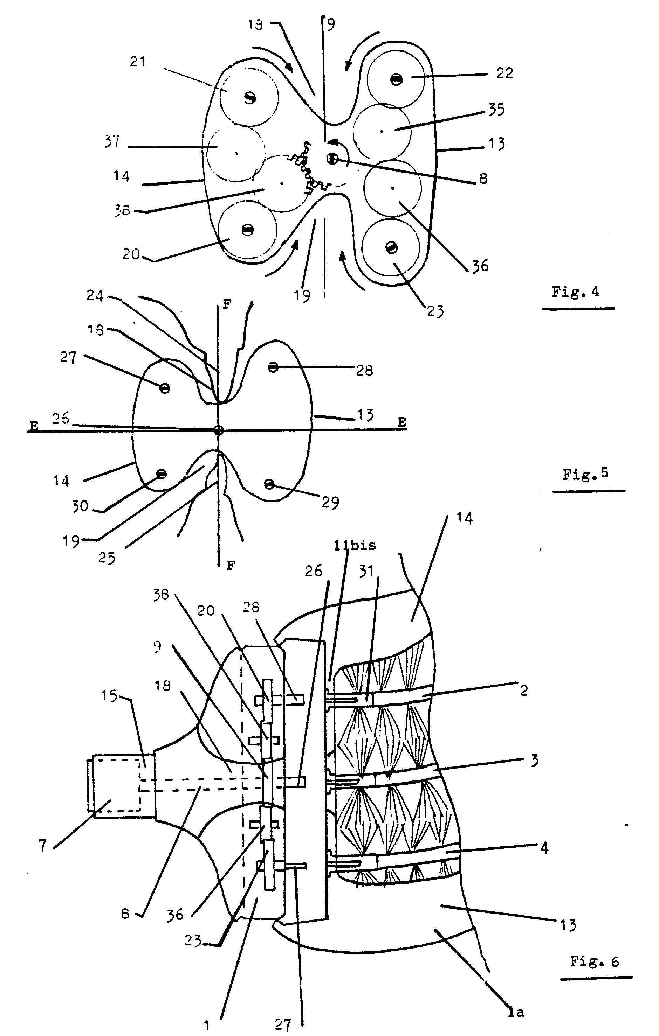

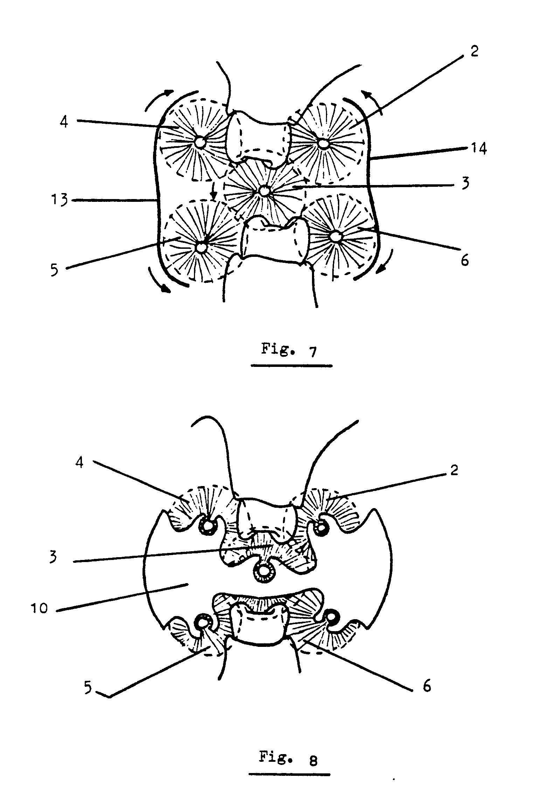

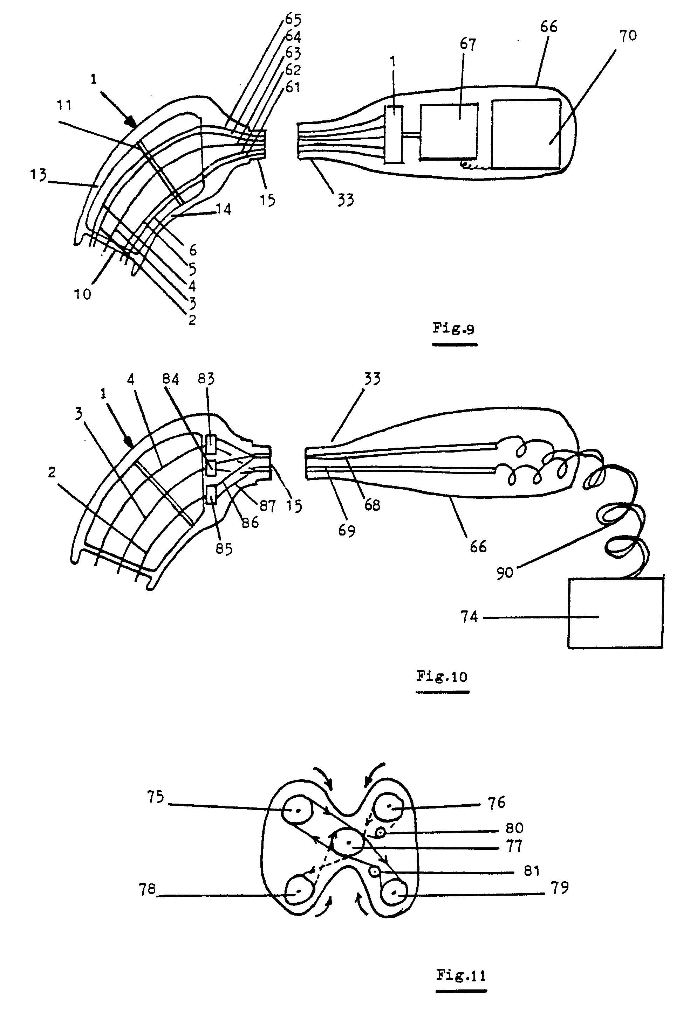

Sur la partie porte-brosses la sont montées en rotation cinq brosses 2, 3, 4, 5 et 6 disposées en H, comme le montrent surtout les fig. 7 et 8. Les cinq brosses 2 à 6 sont montées en rotation sur trois supports 10, 11, 11bis dont l'un (10) est visible sur la fig. 8. Les brosses 2 à 6 sont immobilisées axialement d'une part à l'une de leurs extrémités dans le support 11bis (voir fig. 6) et comportent, à proximité de leur autre extrémité, chacune une rondelle de butée 12 prenant appui sur le support 10.

Les supports 10, 11 et 11bis sont solidaires d'un protège-joue 13 et d'un protège-langue 14 opposés disposés respectivement à l'extérieur du groupe de brosses, sur les deux côtés opposés de ce groupe de brosses correspondant aux deux montants verticaux du H (voir surtout fig. 4).

Les protège-téguments 13 et 14 de même que les brosses 2, 3, 4, 5 et 6, présentent une forme incurvée et une longueur correspondant sensiblement à celles d'une demi-arcade dentaire (voir fig. 3).

Les brosses 2 à 6 sont constituées par un axe· ou moyeu flexible permettant aux brosses de tourner autour de leurs axes tout en conservant la forme incurvée qui leur est imprimée par les protège-téguments 13 et 14, par l'intermédiaire des supports 10, 11, 11bis.

La partie de boîtier 1b dite partie de morsure renferme un train d'engrenages qui sera décrit plus loin. Il comporte à son extrémité opposée à celle par laquelle il peut être accouplé avec la partie de boîtier 1a, une bague de jonction 15 avec un téton de verrouillage 17. L'extrémité 7 de l'axe d'entraînement du train d'engrenages sort de la partie de boîtier 1b concentriquement à la bague de jonction 15. La bague de jonction 15 et l'extrémité 7 de l'axe d'entraînement permettent de relier l'appareil, soit à une manivelle 34, soit à un moto-réducteur électrique 16 dont le commutateur marche-arrêt est référencé 32. La manivelle 34 et le moto-réducteur 16 comportent une partie femelle de jonction 33 venant s'accoupler à la manière d'un verrouillage à baïllonnette avec la bague de jonction 15, la liaison d'entraînement entre l'arbre de sortie de la manivelle 34 ou du moto-réducteur 16 et l'extrémité 7 de l'axe d'entrée 8 du train d'engrenages monté dans la partie de boîtier 1b étant établie lorsque les parties 15 et 33 sont verrouillées l'une sur l'autre.

La fig. 2 montre les deux parties de boîtier 1a et 1b désaccouplées. Le but de ce désaccouplement entre les parties 1a et 1b est de permettre le changement aisé des brosses, c'est-à-dire de la partie de boîtier 1a sur laquelle sont montées les brosses.

La fig. 3 qui représente l'appareil chevauchant une demi-arcade dentaire montre bien que la longueur et la forme des brosses et des protège-téguments correspond sensiblement à celles d'une demi-arcade dentaire. La ligne PM tracée en tirets sur la fig. 3 représente le "plan sagittal médian" dentaire, c est-à-dire un plan passant verticalement par le milieu d'une arcade dentaire de manière à diviser cette arcade en deux demi-arcades symétriques.

Il y a lieu de noter que le protège-joue 13 présente une hauteur accrue dans la zone des lèvres. Par ailleurs, le protège-langue 14 présente, sur toute sa longueur, une hauteur plus faible que le protège-joue 13.

Comme le montre les fig. 4 et 5, l'appareil est assymétrique par rapport à un axe FF vertical passant par l'axe de la brosse médiane 3. Par contre, l'appareil est symétrique par rapport à un plan horizontal EE passant par l'axe de la brosse médiane 3.

Toujours selon les fig. 4 et 5, la partie de boîtier 1b présente deux étranglements 18 et 19 opposés, l'un supérieur, l'autre inférieur.

Les fig. 4 et 6 montrent le train d'engrenages monté à l'intérieur de la partie de boîtier 1b. Ce train d'engrenages comprend un pignon central 9 solidaire en rotation de l'axe d'entrée 8 dont l'extrémité 7 permet le raccordement à la manivelle ou au moto-réducteur d'entraînement. Le pignon central 9 engrène avec deux pignons 35 et 38. Le pignon 35 se trouve en prise directe avec un pignon 22 et, par un pignon intermédiaire 36, en prise avec un pignon 23. De même, le pignon 38 se trouve en prise directe avec un pignon 20 et par un pignon intermédiaire 37 en prise avec un pignon 21. Les pignons 9, 20, 21, 22 et 23 sont disposés, comme les brosses 2 à 6, en H de manière que le pignon central 9 se trouve au milieu de la barre horizontale du H, les pignons 20 et 21 aux deux extrémités d'une barre verticale et les pignons 22 et 23 aux deux extrémités de l'autre barre verticale du H. Le but du train d'engrenages est de permettre, lors de l'entraînement du pignon central 9 dans un sens à savoir dans le sens contraire des aiguilles d'une montre sur la fig. 4, l'entraînement des pignons 20 et 22 dans le même sens que le pignon 9, c'est-à-dire le sens contraire des aiguilles d'une montre, et des pignons 21 et 23 dans le sens contraire.

Il y a lieu de noter que le pignon central 9 se trouve placé au centre entre les deux étranglements 18 et 19 de la partie de boîtier 1b.

Sur la fig. 6 qui représente les deux parties de boîtier 1a et 1b désaccouplées, ainsi que sur la fig 5, on reconnaît les extrémités 26, 27, 28, 29 et 30, côté sortie, des axes des pignons 9, 20, 21, 22 et 23. Ces extrémités font saillie sur la partie de boîtier 1b et sont conformées de manière à permettre une jonction d'entraînement désaccouplable avec les moyeux des brosses 2 à 6, respectivement. A cet effet, comme représenté, les bouts d'axe 26, 27, 28, 29 et 30 peuvent être constitués par des parties de jonction mâles plates venant s'emboîter dans des parties de jonction femelles 31 de forme homotétique, prévues aux extrémités d'entraînement des moyeux des brosses 2 à 6.

Lors de la mise en bouche de l'appareil, entre deux demi-arcades dentaires antagonistes (voir fig. 3), les incisives 24 et 25 (fig. 5) des deux autres demi-arcades dentaires antagonistes viennent se placer dans les étranglements 18 et 19 de la partie de boîtier 1b, tandis que les molaires (et les pré-molaires, canines et incisives) des deux demi-arcades antagonistes à nettoyer viennent se placer, de la manière visible sur les fig. 7 et 8, dans deux couloirs de nettoyage supérieur et inférieur arqués formés par les brosses 2, 3, 4 et les brosses 3, 5, 6. Le sens d'entraînement des brosses est choisi de manière que les quatre brosses d'extrémité 2, 4, 5 et 6 tournent de manière à assurer un brossage des dents dans le sens gencisive-dents, comme indiqué sur la fig. 7. Ces quatre brosses d'extrémité assurent donc le brossage des faces interne et externe de toutes les dents des deux demi-arcades antagonistes, tandis que la brosse centrale 3 assure le brossage des faces occlusales des dents supérieures et inférieures de ces mêmes demi-arcades.

Du fait de la symétrie de l'appareil par rapport au plan EE (fig. 5), on retrouve exactement la même disposition des brosses par rapport aux dents des deux autres demi-arcades dentaires antagonistes, après retournement de l'appareil de 180° et introduction entre les deux autres demi-arcades dentaires antagonistes. Le sens de brossage gencisives-dents par les brosses d'extrémité reste conservé, sans inversion du sens d'entraînement des brosses.

La fig. 9 illustre une variante de l'appareil suivant l'invention qui diffère du mode de réalisation des fig. 1 à 8 par la réalisation monobloc de l'ensemble du boîtier 1. L'entraînement des brosses 2, 3, 4, 5 et 6 s'effectue ici par l'intermédiaire de cinq câbles métalliques multibrins ou joncs de matière plastique 61, 62, 63, 64, 65 flexibles pouvant être le prolongement des moyeux des brosses, dont les extrémité débouchent dans la bague de jonction 15. Cette dernière est destinée à coopérer avec une partie femelle de jonction 33 d'un manche 66 renfermant un moteur électrique 67 alimenté par une source d'énergie 70. Le mouvement de sortie du moteur 67 est distribué par un train d'engrenages 71 analogue à celui utilisé dans l'exemple de réalisation précédent, mais monté dans le manche 66 et non pas sur le boîtier 1, sur cinq câbles ou joncs analogues à ceux montés dans le boîtier 1 et débouchant dans la partie de jonction 33. L'accouplement entre les câbles ou joncs du boîtier 1 et du manche 66 s'effectue par des dispositifs de jonction usuels, par exemple comme ceux utilisés dans l'exemple de réalisation précédent pour la jonction entre les axes de sortie des pignons 9, 20, 21, 22, 23 et les moyeux des brosses.

Dans la variante suivant la fig. 10, comportant également un boîtier 1 monobloc, l'entraînement des cinq brosses dont seules les brosses 2, 3 et 4 sont représentées s'effectue au moyen de cinq turbines à fluide dont seules trois turbines 83, 84 et 85 sont représentées. Ces turbines peuvent être alimentées par un fluide quelconque sous pression (eau, air, etc...). Chaque turbine est reliée à deux tubulures 86, 87 d'arrivée et de sortie de fluide. Toutes ces tubulures d'arrivée et de sortie sont réunies au niveau de la bague de jonction 15 en deux tubes qui se raccordent à deux tubes 68 et 69 se prolongeant à partir de la partie de jonction 33 du manche 66, à l'intérieur de ce dernier, pour rejoindre, par exemple par l'intermédiaire de tubes souples 90, une source 74 de fluide sous pression. Cette source 74 peut être par exemple une pompe entraînée par voie électrique ou un système de raccordement au réseau d'alimentation en eau potable susceptible de se brancher par exemple sur un robinet.

Dans la variante suivant la fig. 11, le train d'engrenages du mode de réalisation des fig. 1 à 8 ou du mode de réalisation de la fig. 9 est remplacé par une transmission comprenant cinq poulies 75, 76, 77, 78, 79 entraînant les cinq brosses, deux courroies croisées coopérant de la manière visible sur la fig. 1 chacune avec la poulie centrale et deux poulies d'extrémité, ainsi que deux poulies supplémentaires 80 et 81 assurant la tension des courroies. Les courroies peuvent bien entendu être remplacées par tout au moyen équivalent (cordons, élastiques, chaînettes, etc...).

Pour permettre une adaptation du boîtier 1 à des arcades dentaires de conformations et de tailles différentes, il est avantageux que la partie de boîtier 1a, c'est-à-dire les parties 10, 11, 13 et 14, soient réalisées en une matière relativement souple. Par contre, la partie de boîtier 1b est réalisée en matière rigide. Ces deux matières peuvent être de préférence des matières plastiques.

Les brosses rotatives doivent avoir un moyeu flexible qui peut être constitué par exemple d'une tige de matière plastique ou d'un tube en matière plastique injecté de caoutchouc. Ce moyeu peut être renforcé de fibres de verre et/ou de fibres de carbone. Les poils traversent ces moyeux de part en part.

Il est également possible de réaliser les brosses dans leur ensemble, c'est-à-dire moyeu et poils, d'une seule pièces en matière plastique, par exemple en polyamide.

Afin d'améliorer l'adaptation à des arcades dentaires de conformations différentes, il peut être avantageux d'utiliser des brosses ayant des poils de différentes longueurs par exemple une alternance de poils longs et de poils courts.

Enfin, dans le but de permettre la réalisation d'un appareil de taille unique standard pour adultes, par race humaine, il est avantageux de donner aux brosses une longueur inférieure (de la valeur d'une dent) à la longueur des demi-arcades dentaires, de manière que les brosses agissent sur les dent depuis le plan sagittal médian jusqu'à la deuxième molaire. La souplesse de la partie de boîtier 1a permet alors, à des utilisateurs ayant des arcades dentaires plus longues, de déplacer légèrement vers l'arrière l'appareil, en court de nettoyage, afin de brosser toutes les dents.

## Revendications

1. Appareil d'hygiène dentaire comprenant deux paires de deux brosses rotatives (2, 4; 5, 6) incurvées, flexibles ou articulées, montées sur un boîtier (1) en forme de secteur arqué, qui présente une forme incurvée correspondant sensiblement à celle des deux arcades dentaires antagonistes et qui comprend un protège-joue extérieur (13) et un protège-langue intérieur (14) opposés, laissant subsister entre eux une ouverture continue inférieure et une ouverture continue supérieure opposées sur toute la longueur des brosses, les brosses étant disposées sur le boîtier et étant entraînées en rotation à l'une de leurs extrémités de manière à nettoyer simultanément les faces intérieures et les faces extérieures des dents des deux maxillaires antagonistes par brossage dans le sens gencive-dents, caractérisé par le fait qu'il comprend cinq brosses (2, 3, 4, 5, 6) montées suivant une disposition en H, les axes de quatre brosses (2, 4, 5, 6) étant disposés aux quatre extrémités du H et l'axe de la cinquième brosse (3) au milieu de la barre horizontale du H, et que le boîtier (1) comprend une partie porte-brosses (1a) en forme de secteur arqué présentant une longueur et une forme incurvée correspondant sensiblement à celles de deux demi-arcades dentaires antagonistes, ladite partie porte-brosses (1a) étant composée du protège-joue (13), du protège-langue (14) et d'au moins deux entretoises transversales (10, 11, 11bis) servant de supports de montage pour les brosses, et une partie de morsure (1b) située dans le prolongement de l'extrémité d'entraînement des brosses et formant deux étranglements (18, 19) supérieur et inférieur opposés, adaptés pour recevoir, lorsque l'appareil est en bouche entre deux demi-arcades dentaires antagonistes, les incisives supérieures et inférieures des deux autre demi-arcades dentaires antagonistes, en vue du blocage de l'appareil en bouche par morsure à l'endroit desdits étranglements.

2. Appareil selon la revendication 1, caractérisé par le fait que les cinq brosses (2, 3, 4, 5, 6) sont entraînées à partir d'un arbre-moteur par l'intermédiaire de neuf pignons (9, 20, 21, 22, 23, 35, 36, 37, 38).

3. Appareil selon la revendication 2, caractérisé par le fait que lesdites deux parties de boîtier (1a, 1b) sont deux parties séparées susceptibles d'être accouplées et désaccouplées, lesdites brosses (2 à 6) étant montées dans l'une desdites parties (1a) et lesdits pignons étant montés dans l'autre desdites parties (1b).

4. Appareil selon la revendication 2, caractérisé par le fait que lesdites deux parties de boîtier (1a, 1b) sont réalisées d'une seule pièce, que lesdits pignons (9, 20 à 23, 35 à 38) sont montés dans un manche (66) susceptible d'être accouplé et désaccouplé avec ledit boîtier, et que la liaison d'entraînement entre lesdits pignons et lesdites brosses est établie à l'aide de câbles ou joncs flexibles (61 à 65) comportant des moyens de jonction entre le boîtier et le manche.

5. Appareil selon la revendication 1, caractérisé par le fait que les deux parties de boîtier (1a, 1b) sont réalisées d'une seule pièce et que les brosses sont entraînées à l'aide de turbines alimentées en fluide sous pression.

6. Appareil suivant l'une quelconque des revendications précédentes, caractérisé par le fait que la partie porte-brosse (1a) est réalisée en une matière souple et la partie de morsure (1b) du boîtier est réalisée en une matière rigide.

7. Appareil suivant l'une quelconque des revendications précédentes, caractérisé par le fait que les brosses (2, 3, 4, 5, 6) présentent des poils de longueurs différentes, par exemple une alternance de poils longs et de poils courts, et/ou d'orientations différentes.

## Patentansprüche

1. Zahnpflegevorrichtung mit zwei Paaren von je zwei rotierenden, gebogenen, elastischen oder gelenkigen Bürsten (2, 4; 5, 6), die an einem ein sektorartiges Bogenstück darstellenden Gehäuse (1) gelagert sind, dessen gebogene Form im wesentlichen derjenigen der einander gegenüberstehenden Zahnreihen entspricht und das einen äusseren Wangenschutz (13), und einen diesem gegenüberliegenden inneren Zungenschutz (14) aufweist, zwischen denen eine über die gesamte Länge der Bürsten verlaufende durchgehende untere Öffnung und eine dieser gegenüberliegende durchgehende obere Öffnung vorgesehen ist, wobei die Bürsten (50), an dem Gehäuse angeordnet sind und an ihrem einen Ende (50), in Drehung versetzt werden, daß sie gleichzeitig die Innenseiten und die Außenseiten der Zähne der beiden gegeneinander gerichteten Kiefer durch Bürsten in Richtung vom Zahnfleisch zu den Zähnen reinigen, dadurch gekennzeichnet, daß fünf in H-Form angeordnete Bürsten (2, 3, 4, 5, 6) vorgesehen sind, wobei die Achsen von vier Bürsten (2, 4, 5, 6) sich an den vier Enden des H befinden und die Achse der fünften Bürste (3) sich in der Mitte des horizontalen Steges des H befindet, und daß das Gehäuse (1) einen Bürstenträgerteil (1a) in Form eines sektorartigen Bogenstücks aufweist, das nach Länge und Krümmung im wesentlichen der Länge und Krümmung von zwei gegenüberstehenden Zahn-Halbbogen entspricht, wobei der gennante Bürstenträgerteil (1a) sich zusammensetzt aus dem Wangenschutz (13), dem Zungenschutz (14), und mindestens zwei als Halterung für die Bürsten dienenden Querstegen (10, 11, 11bis), sowie einen Bißteil (1b), der in der Verlängerung des Antriebsendes der Bürsten liegt und eine obere und eine dieser gegenüberliegende untere Einschnürung (18 und 19) besitzt, welche Einschnürungen, wenn die Vorrichtung sich im Munde zwischen zwei einander gegenüberstehenden Zahn-Halbbogen befindet, die oberen und unteren Schneidezähne der beiden anderen einander gegenüberstehenden Zahn-Halbbogen aufnimmt, um die Vorrichtung durch Beißen auf den Einschnürungsstellen im Munde festzuhalten.

2. Zahnpflegevorrichtung nach Anspruch 1, dadurch gekennzeichnet, daß die fünf Bürsten (2, 3, 4, 5, 6) von einer Antriebswelle über neun Ritzel (9, 20, 21, 22, 23, 35, 36, 37, 38) angetrieben werden.

3. Zahnpflegevorrichtung nach Anspruch 2, dadurch gekennzeichnet, daß die genannten beiden Gehäuseteile (1a, 1b) zwei getrennte Teile darstellen, die zusammengefügt und voneinander getrennt werden können, und daß die genannten Bürsten (2 bis 6) in den einen Teil (1a) und die genannten Ritzel in der anderen Teil (1b) angebracht sind.

4. Zahnpflegevorrichtung nach Anspruch 2, dadurch gekennzeichnet, daß die genannten beiden Gehäuseteile (1a, 1b) als einheitliches Bauteil ausgeführt sind, daß die genannten Ritzel (9, 20 bis 23, 35 bis 38) in einem Handgriff (66) angebracht sind, der mit dem genannten Gehäuse zusammengefügt und von ihm getrennt werden kann, und daß die Antriebsverbindung zwischen den genannten Ritzeln und den genannten Bürsten mit Hilfe von Kabel oder biegsamen Stäben (61 bis 65) hergestellt ist, die Verbindungsmittel zwischen Gehäuse und Handgriff besitzen.

5. Zahnpflegevorrichtung nach Anspruch 1, dadurch gekennzeichnet, daß die beiden Gehäuseteile (1a, 1b) einstückig hergestellt sind, und daß die Bürsten durch von Druckmedium beaufschlagten Turbinen angetrieben werden.

6. Zahnpflegevorrichtung nach einem der vorhergehenden Ansprüche, dadurch gekennzeichnet, daß der Bürstenträgerteil (1a) aus einem flexiblen Werkstoff und der Bißteil (1b) des Gehäuses aus einem starren Werkstoff hergestellt ist.

7. Zahnpflegevorichtung nach einem der vorhergehenden Ansprüche, dadurch gekennzeichnet, daß die Bürsten (2, 3, 4, 5, 6) Borsten unterschiedlicher Länge, z. B. abwechselnd lange und kurze Borsten, und/oder unterschiedlicher Ausrichtung aufweisen .

**Claims**

1. Device for dental hygiene comprising two pairs of two curved flexible or articulated rotative brushes (2, 4; 5, 6), mounted on a casing (1) in the form of an arc-shaped sector, which has a curved form corresponding substantially to that of the two opposing dental arches and which comprises an external cheek-guard (13) and an internal tongue-guard (14) opposite each other, leaving between them a lower continuous opening and an upper continuous opening opposite to each other along the whole length of the brushes, the brushes being arranged on the casing and being driven in rotation at one of their ends such as to simultaneously clean the interior faces and the exterior faces of the teeth of the two opposed maxillae by brushing in gum-teeth direction, characterised by the fact that it comprises five brushes (2, 3, 4, 5, 6) mounted according to an H-arrangement, the axes of four brushes (2, 4, 5, 6) being arranged at the four ends of the H and the axis of the fifth brush (3) in the middle of the horizontal bar of the H and that the casing (1) comprises a brush-holder (1a) part in the form of an arc-shaped sector with a length and a curved form corresponding substantially to those of two opposed dental half-arches, the said brush-holder (1a) part consisting of the cheek-guard (13), the tongue-guard (14) and of at least two transverse spacers (10, 11, 11bis) serving as mounting supports for the brushes, and a biting section (1b) situated in the projection of the driving end of the brushes and forming two opposed upper and lower constrictions (18, 19) adapted for receiving , when the device is in the mouth between two opposed dental half-arches, the upper and lower incisors of the two other opposed dental half-arches in order to lock the device in the mouth by biting at said constrictions.

2. Device according to claim 1, characterised by the fact that the five brushes (2, 3, 4, 5, 6) are driven from a driving shaft by means of nine pinions (9, 20, 21, 22, 23, 35, 36, 37, 38).

3. Device according to claim 2, characterised by the fact that the said two parts of the casing (1a, 1b) are two separate parts, capable of being coupled and uncoupled, the said brushes (2 to 6) being mounted in one of the said parts (1a) and the said pinions being mounted in the other of the said parts (1b).

4. Device according to claim 2, characterised by the fact that the said two parts of the casing (1a, 1b) are made from one single part, that the said pinions (9, 20 to 23, 35 to 38) are mounted in a handle (66) capable of being coupled and uncoupled with the said casing, and that the driving link between the said pinions and the said brushes is established with the aid of cables or flexible rods (61 to 65) comprising connection means between the casing and the handle.

5. Device according to claim 1, characterised by the fact that the two parts of the casing (1a, 1b) are made from one single piece and that the brushes are driven with the aid of turbines, supplied by fluid under pressure.

6. Device according to one of the preceding claims, characterised by the fact that the brush-holder (1a) part is made from a flexible material and the biting part (1b) of the casing is made from a rigid material.

7. Device according to one of the preceding claims, characterised by the fact that the brushes (2, 3, 4, 5, 6) have bristles of different lengths, for example alternate long and short bristles, and/or of different directions.

**0 101 618**

Fig. 1

Fig. 2

Fig. 3

Fig. 4

Fig. 5

Fig. 6

Fig. 7

Fig. 8

Fig.9

Fig.10

Fig.11